**Europäisches Patentamt**

**European Patent Office**

**Office européen des brevets**

(11) Publication number: **0 173 658**
**A2**

## (12) EUROPEAN PATENT APPLICATION

(21) Application number: **85850209.9**

(22) Date of filing: **18.06.85**

(51) Int. Cl.⁴: **F 16 D 65/04**

(30) Priority: **27.06.84 SE 8403412**

(43) Date of publication of application: **05.03.86**
**Bulletin 86/10**

(84) Designated Contracting States: **DE FR GB SE**

(71) Applicant: **AB Hägglund & Söner, Box 600, S-891 01 Örnsköldsvik (SE)**

(72) Inventor: **Hakan, Ingvast, Sagudden 21, S-890 23 Själevad (SE)**

(74) Representative: **Lagman, Sven et al, H. Albihns Patentbyra AB Box 7664, S-103 94 Stockholm (SE)**

(54) **Brake pad for disk brakes.**

(57) A brake pad for friction brakes of the disk brake type is provided with a brake lining (7) mounted on a support means (8), such as to be pressable against a brake disk (2). The support means carries a centrally placed pressure distributor (5) for translating pressing force to the brake pad (3). The support means includes a first (9) and a second (10) part between which a liquid-filled balancing chamber (11) is arranged. Force translation between the first and second parts is intended to take place substantially via the liquid in the balancing chamber (11), so that good surface engagement is enabled between the brake disk (2) and lining (7), also for large pressing force and when the brake pad has large extension.

Brake pad for disk type friction brakes

The present invention relates to a brake pad for a friction brake of the disk type, with a brake lining mounted on a support means, where the lining can be pressed against a brake disk with the aid of the support means, which carries a centrally placed pressure distributor for translating pressing force to the brake disk.

In braking with a friction brake high temperatures are often attained at the contact surfaces. The magnitude of the temperature has a large effect on wear and the coefficient of friction. The rise in temperature is usually proportional to the surface pressure and relative velocity between the friction surfaces. It is therefore desirable to achieve as uniform surface engagement as possible to achieve as good braking action and as low a wear level as possible.

Particularly with large brake pads with central application of force, it is difficult to avoid high local surface pressures, caused either by deformations in the brake pad or irregularities in the brake disk. A theoretical method of obtaining uniform surface pressure is to achieve very accurate flatness in the parts which are to be pressed together, and to make these parts so stiff that deformations caused by pressing forces will be negligible. However, such a solution leads to very clumsy brake pads requiring much material, especially for disk brakes catering for large power transference, where the brake pad lining surface will be very large.

A further reason for having good surface engagement between disk and lining is that conducting heat away can thus be made more efficient. This is particularly important when it is a question of large braking power for long periods. For example, in heavy off-shore winches it may be a matter of

2

0173658

providing braking power in the region of 4 MW for as long as half an hour. A still further factor that increases the need of good surface engagement between disk and lining is the desire to be able to utilise metallic liners, which have better wear resistance, but less resilience than earlier types of brake lining. Due to their poorer resilience, metallic liners have more trouble in adjusting to deformations in the brake pad.

The object of the present invention is to provide an improved brake pad that permits giving it large dimensions, with good surface engagement and controlled surface pressure between brake disk and lining.

This is achieved in accordance with the invention by the support means including a first and a second part, between which a liquid-filled balancing chamber is arranged, and by force translation between the first and second parts being intended to take place essentielly via the liquid in the balancing chamber, whereby good surface engagement between brake disk and lining is enabled even for a large pressing force and large extension of the brake pad.

Further in accordance with the invention, there is a seal between the first and second parts, preferably of the O ring type, for defining the balancing chamber, this seal being adapted for being compressed should there be relative movement towards each other of the first and second parts along the line of action of the pressing force. It is further suitable to connect a spacing means for regulating the axial extension of the balancing chamber.

By the inventive solution the entire brake lining may have surface engagement against the brake disk that is better and more uniform than it was possible to achieve before with large brake pads.

0173658

The invention will now be described in detail with the aid
of an embodiment illustrated on the accompanying drawing,
where:

Figure 1 illustrates in section a principle implementation
of a brake pad in accordance with the invention.
Figure 2 schematically illustrates in section an inventive
embodiment of a brake pad with cooling.
Figure 3 is a fragmentary section of the brake lining
backing plate to the brake pad of Figure 2.
Figure 4 is a section along the line IV-IV in Figure 3.
Figure 5 illustrates a possible embodiment of a pressure
regulator for the brake pad of Figure 2, and
Figures 6 and 7 are schematic sections through other embodiments of a brake pad, in accordance with the invention.

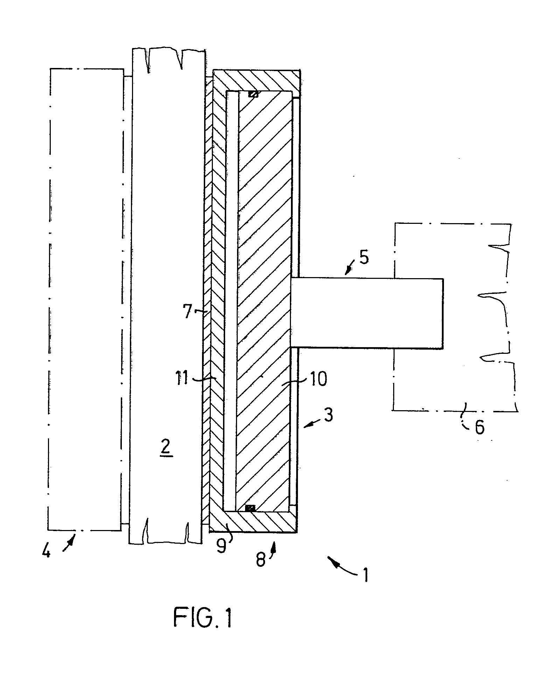

In a braking apparatus 1 illustrated in Figure 1 there are
two brake pads 3 and 4, executed according to the invention,
one on either side of a brake disk 2 and acting counter to
each other. The pad 4 is only indicated by chain-dotted
lines since it is of the same implementation as the pad 3.
The latter is carried via a pressure distributor 5 by a
holder 6 supplying braking force, and can thus be pressed
against the brake disk 2.

In the brake pad 3 there are included a brake lining 7 for
engagement with the brake disk 2, the lining being carried
by a support means 8, in which there are included a first
part 9 and a second part 10, these parts having arranged
between them a liquid-filled balancing chamber 11.

With the aid of the liquid in the balancing chamber, a
uniform distribution of the pressing force acting on the
pressure distributor 5 is obtained on the first part 9.
There is thus avoided uneven engagement as a result of
deformations in the second part 10 for large pressing forces,
which is particularly important when the brake pad 3 has
a large area in relation to the distributor 5.

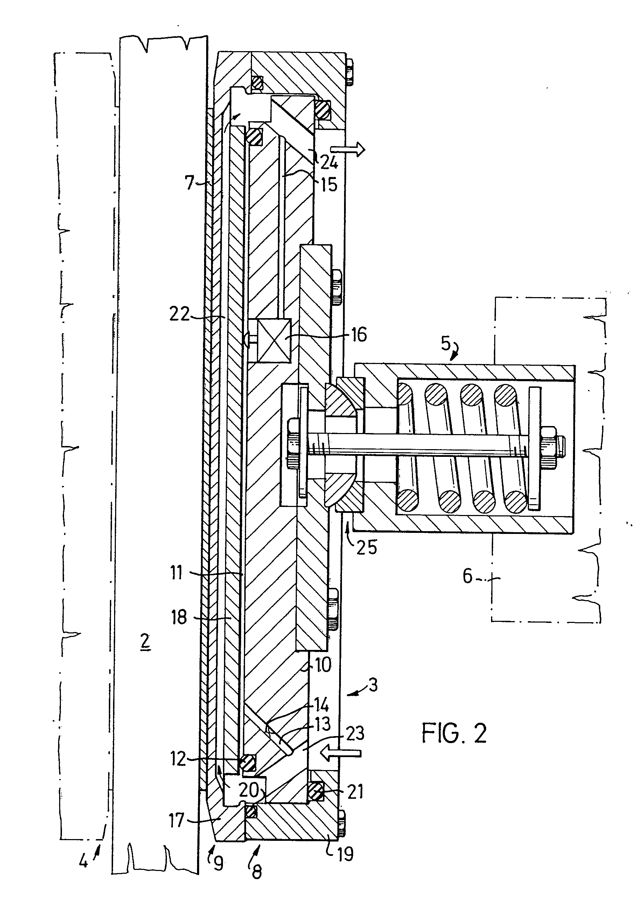

An advantageous variant of the invention is illustrated in Figure 2. As with Figure 1, a lining 7 is mounted on a support means 8 comprising a first and a second part 9 and 10, between which there is a balancing chamber 11. In the peripheral region between the first part 9 and the second part 10 there is a seal 12, preferably of the O ring type, which defines the balancing chamber 11 laterally. This seal 12 allows mutual movement between the parts 9 and 10 in the direction of pressure application on the pad 3. Pressurised medium may be supplied to the chamber 11 via an inlet 13 arranged in the second part 10, the inlet suitably being provided with a constriction 14. In a corresponding way an outlet 15 for the balancing chamber is arranged in the second part 10, this outlet being equipped with a spacing regulator 16 for regulating the axial extension of the chamber 11.

The first part 9 includes an attachment plate 17 for the brake lining, and an intermediate plate 18 situated on the inside of the plate 17 to form a wall for the balancing chamber 11. The attachment plate 17 is joined to a frame 19 and is sealed against it by a seal 20. In turn, the frame 19 is sealed via a seal 21 against the second part 10 arranged in it, such that the part 10 has no-play axial movement in the frame 19.

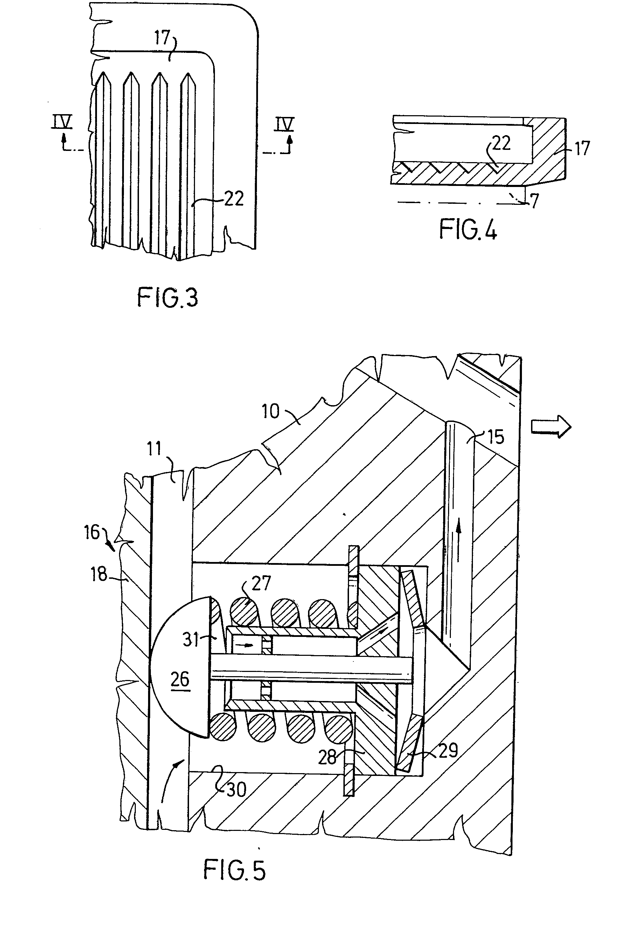

For cooling the brake pad the first part 9 is provided with cooling ducts 22 in communication with an inlet 23 arranged in the second part 10, and an outlet 24 also arranged in this part. As will be seen in more detail from figures 3 and 4, the cooling ducts are suitably formed as grooves in the surface of the lining attachment plate 17 facing towards the intermediate plate 18. The implementation of the ducts may of course vary according to requirements.

The pressure distributor 5 is attached to the brake pad 3 via a spherical bearing 25, which allows the pad to adjust itself to an attitude suitable for engagement against the brake disk 2, the pivoting axis of the bearing suitably being on a level with the surface of the brake lining.

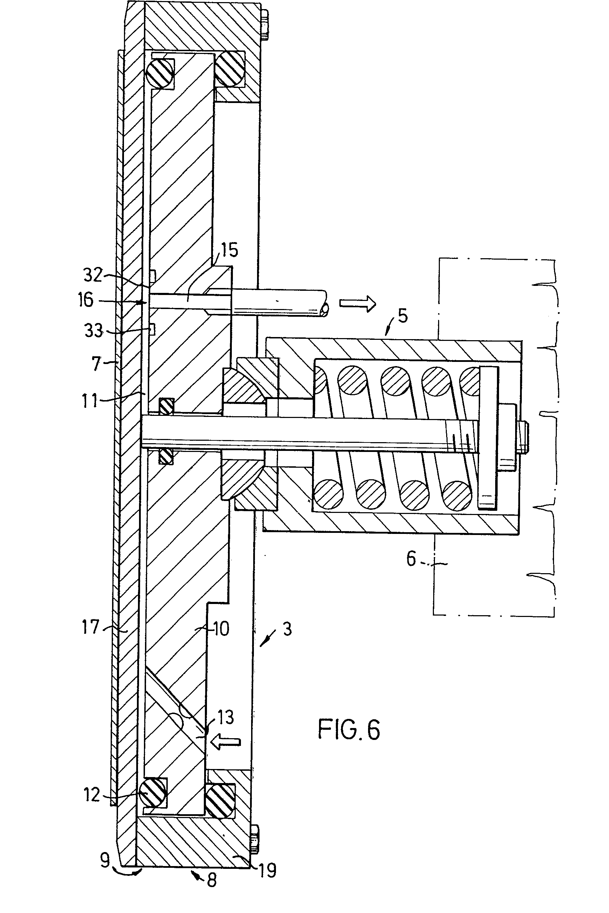

A possible embodiment of the spacing regulator 16 will be seen from Figure 5. A sensing body 26 thrusts into the balancing chamber 11 and is pressed against the intermediate plate 18 with the aid of a spring 27 carried by a holder 28. In its turn the holder bears via a spring 29 against the bottom of a recess 30 communicating with the outlet 15 in the second part 10. Pressurised medium can pass from the chamber 11 to the outlet 15 via a gap 31 between the sensing body 26 and a projecting portion of the holder 28. The pressure in the balancing chamber 11 and thus its axial extension also may be regulated as a function of the magnitude of the pressing force. For different such forces the chamber 11 will have somewhat varying size, i.e. the distance between the first part and the intermediate plate will vary, but independent of the size of the pressing force this will be balanced by the pressure in the balancing chamber. If the pressing force changes from a state where there is equilibrium between the force and the pressure in the chamber 11, the size of the gap 31 will increase for a reduction in the pressing force, which results in a drop in pressure in the chamber. On the other hand, if the pressing force increases, the gap 31 will decrease, with an increase in the chamber pressure as a result. By the bias in the spring 29 being greater than that in the spring 27, damage to the spacing regulator 16 is avoided when the sensing body 26 reaches an end position where it engages against the holder 28.

As will be seen from Figure 2, one and the same pressurised medium may be used for cooling and for pressurising the balancing chamber 11. It is, however, quite possible to use different media for cooling and pressurising, and to provide separate inlets and outlets for them. There is nothing to prevent the cooling facility being dispensed with, which may be desirable with brakes which are only used for short durations and where there is minor need of cooling. An embodiment suitable for such a purpose is illustrated in Figure 6, where no cooling facility is utilised and where the intermediate plate 18 has been dispensed with. The balancing chamber 11 is here defined by the brake lining attachment plate 17, the seal 12 and the second part 10. The spacing regulator 16 has been given a substantially simplified implementation and comprises a constriction arranged around the outlet 15, the constriction being formed between the attachment plate 17 and an annular surface 32 situated between the mouth of the outlet 15 and an annular duct 33 disposed around the outlet 15 in the second part 10.

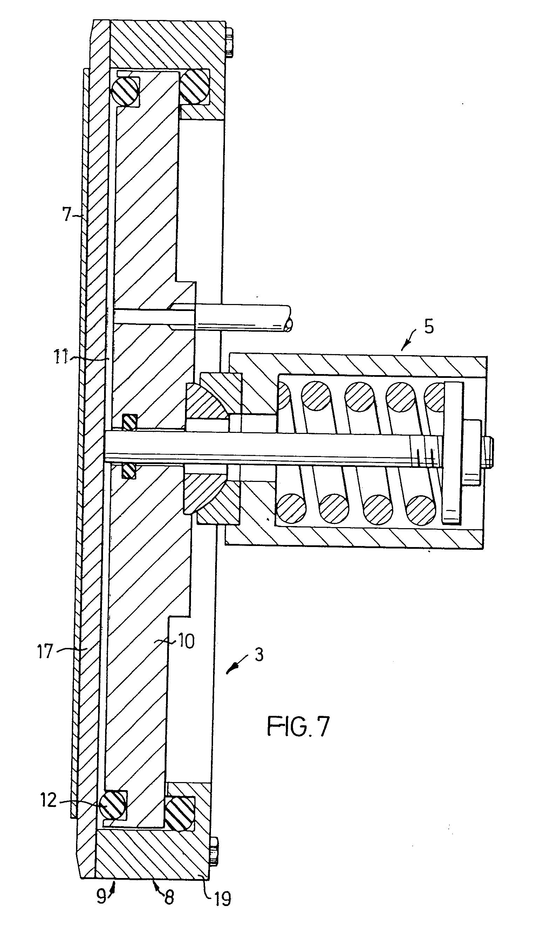

The embodiments according to Figures 1, 2 and 6 are particularly suitable when the pressing force is translated via a movably mounted pressure distributor 5, which is acted on by an exterior pressure unit in the form of a brake force-supplying holder 6, as in the case with conventional disk brakes. However, it is also possible to utilise an embodiment where the pressure distributor 5 is rigidly mounted and where the pressing force is obtained in stead by displacing the first part 9 with the aid of the pressure in the balancing chamber 11 so that the desired pressing force is obtained. Such an embodiment without special cooling facility is illustrated in Figure 7, but cooling may be arranged if necessary, e.g. on the basis of the embodiment in Figure 2.

When cooling is desired, it is suitable to make the lining attachment plate 17 rather thin so that good heat conduction is obtained. In this way the first part will be comparatively flexible, in any case much more flexible than the second part 10, which must not be flexible from the aspect of taking up force.

By regulating the axial extension of the balancing chamber 11 it will be possible to decrease the axial dimensions of the brake pad, while the consequences of liquid leakage from the balancing chamber are mitigated. Braking can thus more easily be enabled, also for direct contact between the first and second parts, which is important from the safety aspect.

0173658

CLAIMS.

1. Brake pad for friction brakes of the disk brake type, with a brake lining (7) mounted on a support means (8) such that the support means may be pressed against a brake disk (2), the support means carrying a centrally placed pressure distributor (5) for translating pressing force to the brake pad (3), characterized in that the support means (8) includes a first and a second part (9) and (10), between which there is arranged a liquid-filled balancing chamber (11), and in that force translation between the first and second parts is intended to take place substantially via the liquid in the balancing chamber (11), whereby good surface engagement between brake disk (2) and brake lining (7) is also enabled for a large pressing force and when the brake pad (3) has large extension.

2. Brake pad as claimed in claim 1, characterized in that at the peripheral region between the first (9) and second (10) part there is a seal (12), preferably of the O ring type, for defining the balancing chamber (11), and in that this seal is adapted for being compressed for mutual relative movement between the first (9) and second (10) part towards each other in the line of action of the pressing force.

3. Brake pad as claimed in claim 2, characterized in that a spacing regulator (16) is connected to the balancing chamber (11) for regulating the axial extension of the chamber.

4. Brake pad as claimed in any one of claims 1-3, characterized in that the balancing chamber (11) has substantially less extension in a direction parallel to the line of action of the pressing force than in a direction at right angles thereto.

5. Brake pad as claimed in any one of claims 1-4, charac-

0173658

terized in that the first part (9) is provided with cooling ducts (22).

6. Brake pad as claimed in claim 5, characterized in that the first part (9) includes a brake lining attachment plate (17) with an intermediate plate (18) engaging against it, and in that the attachment plate (17) is provided with grooves on its surface facing towards the intermediate plate (18), these grooves being intended to define cooling ducts (22) in coaction with the intermediate plate.

0173658

1/5

FIG.1

FIG. 2

FIG.3

FIG.4

FIG.5

0173658

4/5

FIG.6

7

11

17

12

9  8  19

5

10

3

FIG. 7